Europäisches Patentamt

European Patent Office

Office européen des brevets

(11) Publication number: **0 154 781**
**B1**

(12) **EUROPEAN PATENT SPECIFICATION**

(45) Date of publication of patent specification: **18.07.90**

(21) Application number: **85100800.3**

(22) Date of filing: **03.03.82**

(60) Publication number of the earlier application in accordance with Art. 76 EPC: **0 061 243**

(51) Int. Cl.⁵: **G 02 B 6/38**

(54) **Optical waveguide connector.**

(30) Priority: **16.03.81 US 244454**
**16.03.81 US 244527**
**16.03.81 US 244526**

(43) Date of publication of application:
**18.09.85 Bulletin 85/38**

(45) Publication of the grant of the patent:
**18.07.90 Bulletin 90/29**

(84) Designated Contracting States:
**CH DE FR GB IT LI NL**

(56) References cited:
**EP-A-0 011 561**     **US-A-3 637 284**
**DE-A-1 200 614**     **US-A-4 081 208**
**GB-A-2 025 084**     **US-A-4 178 068**
**US-A-1 817 772**     **US-A-4 201 445**
**US-A-3 569 933**     **US-A-4 354 731**

**COMPUTER DESIGN, vol. 20, no. 6, June 1981, pages 56-60, Winchester, Mass., US; "Fiber optic components break price barrier in short range transmission"**

(73) Proprietor: **AMP INCORPORATED**
**P.O. Box 3608 470 Friendship Road**
**Harrisburg Pennsylvania 17105 (US)**

(72) Inventor: **Bowen, Terry Patrick**
**York Hill Drive**
**Etters Pennsylvania 17319 (US)**
Inventor: **Caron, Bernard George**
**4330 Winthrop Drive**
**Harrisburg Pennsylvania 17112 (US)**
Inventor: **Glover, Douglas Wade**
**2309 Valley Road**
**Harrisburg Pennsylvania 17104 (US)**
Inventor: **Hoffer, John Carey**
**507 North 36th Street**
**Harrisburg Pennsylvania 17109 (US)**

(74) Representative: **Warren, Keith Stanley et al**
**BARON & WARREN 18 South End Kensington**
**London W8 5BU (GB)**

Courier Press, Leamington Spa, England.

**Description**

The present invention relates to optical waveguide connections and in particular to optical waveguide plug members comprising a retention sleeve that is secured onto an optical waveguide and into the plug member and that functions to axially locate a single optical waveguide fibre on the axis of an internal bore within the plug.

Increased penetration of fibre optics technology into data distribution and communications applications has been primarily inhibited by cost factors. Presently available connectors for axially aligning a pair of fibres typically comprise multiple components which are relatively expensive to manufacture. Accordingly, it has been economically undesirable to convert hard wire distribution applications to fibre optic systems, partly due to the cost disadvantage of fibre optic connector components.

Moreover, presently available fibre optic connector technology requires that the end surface of the optical fibre be polished in order to achieve an efficient optical coupling. The polishing procedure further adds to the applied cost of the product and creates myriad problems in field applications. Also, existing connectors often require the use of specialized tooling in effectuating a fibre termination, and they further require the use of adhesive materials for bonding the fibre to the connector unit. The inconveniences and expense of these requirements are obvious.

A further problem confronted by fibre optic connector technology is attributable to the fact that a variety of cable sizes exists in the industry. For example, the relatively large plastic fibre used in certain systems can range in size between 41 to 102 thousandths of a centimeter (16 to 40 thousandths of an inch). Consequently, the connectors for terminating these fibres must accommodate this wide range of potential fibre sizes, which further complicates the achieveent of a suitable connector system. To complicate matters further, the outer diameter of jacket, which protects the fibres in a cabling structure, can also vary. Presently available connectors, because of their alignment techniques, have difficulty in accommodating the termination of the wide range of cable sizes which a user must confront in the optical cable world.

It is known from EP-A-0011561 to provide a member for coaxially locating an optical waveguide within a bore of a connector, comprising a body for insertion into the bore, the body having an axial passageway for receiving the waveguide, a forward alignment nose portion having an opening therethrough communicating with the passageway, and a rearward passageway portion for passage of the waveguide. The nose portion serves to centre the waveguide which is secured to the body by crimping.

It is known from US-A-3 569 933 and US-A-3 637 284 to provide a retention member for securing a fibre optic waveguide in the bore of a receptacle which comprises a U-shaped ferrule adapted to be crimped about the waveguide into a tubular body. The ferrule is formed with inwardly directed tines which bite into the waveguide sheath on crimping, and with outwardly and rearwardly directed tines for engaging a forward facing shoulder of the receptacle to retain the ferrule therein.

US-A-4 240 695 teaches the use of separate flexible fingers at the nose end of the ferrule, which are brought together to grip a fibre end when the ferrule is inserted into a sleeve.

It is known from US-A-4 081 208 to provide a termination member for a conductor and waveguide for pluggable connection into a sleeve and which comprises a sleeve formed with forwardly directed tines which after assembly to a composite cable are pushed into penetrate the cable and secure the sleeve thereto.

It is known from DE-B-l 200 614 to provide a cable termination or coupling in which tubular inserts are internally and externally serrated to resist withdrawal of the cable and withdrawal of the insert from a surrounding sleeve.

The invention seeks to improve on the known fibre optic connectors by providing a connector capable of field assembly and pluggable connection. The invention consists in a connector plug member for coaxially locating an optical waveguide of the type comprising a centre waveguide fibre and an outer jacket layer within a bore of a receptacle member the plug member comprising an elongate plug body for insertion within the bore, the body having an axial passageway for receiving the optical waveguide, a forward alignment nose portion having an opening therethrough communicating with the passageway, and a rearward passageway portion for passage of the wave guide to the nose portion characterised in that a retention sleeve is provided for receiving and securing the waveguide and for insertion and retention within the rear passageway portion, the retention sleeve having tines for inhibiting rearward withdrawal of the optical waveguide from the plug member, with the nose portion being bifurcated by a transverse slot, the opening in the nose portion being defined by opposed V-shaped notch surfaces separated by the transverse slot extending through the nose portion whereby on insertion of the waveguide and the retention sleeve into the passageway through the rearward passageway portion a forward end portion of the waveguide fibre is grippingly received between the opposed notch surfaces, said nose portion further comprising external resilient protrusion members for engaging the receptacle bore and radially influencing said V-profiled surfaces inward into clamping engagement with the waveguide fibre.

Preferably the retention member is that disclosed and claimedin our copending European Patent Application EP-A-61243 from which the present application is divided that is to say the retention member has a first series of inwardly directed tines angularly spaced around the sleeve for engaging the optical waveguide and a second series of outwardly directed tines extending rearwardly for engaging the rearward passageway portion and resisting withdrawal of the sleeve, and in that the tubular sleeve is tubular prior to insertion of the waveguide therein, in that the first series of inwardly directed tines extend resiliently forwardly within the sleeve prior to insertion of the waveguide therein, in such a manners that upon insertion of the cable forwardly into the sleeve the said tines resiliently engage the sheath thereof to admit forward movement of the cable into the sleeve and upon exertion of a force axially rearwardly on the cable the said tines penetrate the sheath thereby to secure the sleeve to the cable, and in that the second series of outwardly directed tines are arranged resiliently to engage the side wall of the bores when the sleeve is inserted therein in such a manner that upon insertion of the sleeve forwardly into the passageway portion the said tines resiliently engage the side walls of the passageway to admit forward movement and upon application of a rearward axial force on the waveguide the said tines plough into the side wall of passageway to resist withdrawal and secure the tubular sleeve retention member in the bore.

The invention will now be described by way of example with reference to the accompanying partly diagrammatic drawings, in which:-

Figure 1 is an exploded perspective view of an optical waveguide connector, illustrating one bulkhead-mounted receptacle element with one connector plug sub-assembly inserted therein, and another plug assembly exploded therefrom, said last plug assembly having an optical fibre and retention sleeve exploded therefrom;

Figure 2 is a side elevation through the optical waveguide connector illustrated in Figure 1, wherein the receptacle component has one of two connector plug subassemblies inserted therein, and the other plug assembly exploded therefrom;

Figure 3 is a partial side elevation view of the subject receptacle body of Figure 2, having the forward alignment portion of a plug member exploded therefrom. The plug member terminates an optical fibre of the type having a relatively larger diameter fibre core, and Figure 3 illustrates the capability of the subject invention to terminate a fibre having a diametered size variable within a specified range of limits;

Figure 4 is a partial side elevation view of the subject receptacle body, with the plug and larger diameter fibre illustrated in Figure 3 inserted into the axial bore of the receptacle;

Figure 5 is a frontal view of the subject connector plug, taken along the line 5-5 of Figure 2;

Figure 6 is a frontal view taken through the alignment nose portion of the subject connector plug, taken along the line 6-6 of Figure 2;

Figure 7 is a transverse section view through the connector of Figure 2, taken along the lines 7-7, and illustrates operation of the retention sleeve tines in effecting retention of an optical waveguide in the assembled condition.

Figure 8 is an exploded perspective view of the subject invention illustrating a duplex receptacle configuration, illustrated having a duplex plug exploded therefrom and a pair of simplex plug members likewise;

Figure 9 is a side elevation view taken through the duplex receptacle illustrated in Figure 8, having the duplex plug member matably engaged therewith, along with one of the two simplex plug members. A second simplex plug member is illustrated exploded from the receptacle body for purposes of illustration;

Figure 10 is a perspective view of an active device module, having a simplex plug member exploded therefrom. Similarly, an active semiconductor package is illustrated in Figure 11 within the module housing, and

Figure 11 is a side elevation view through the active device module illustrated in Figure 10 with the simplex plug assembled in the mating condition.

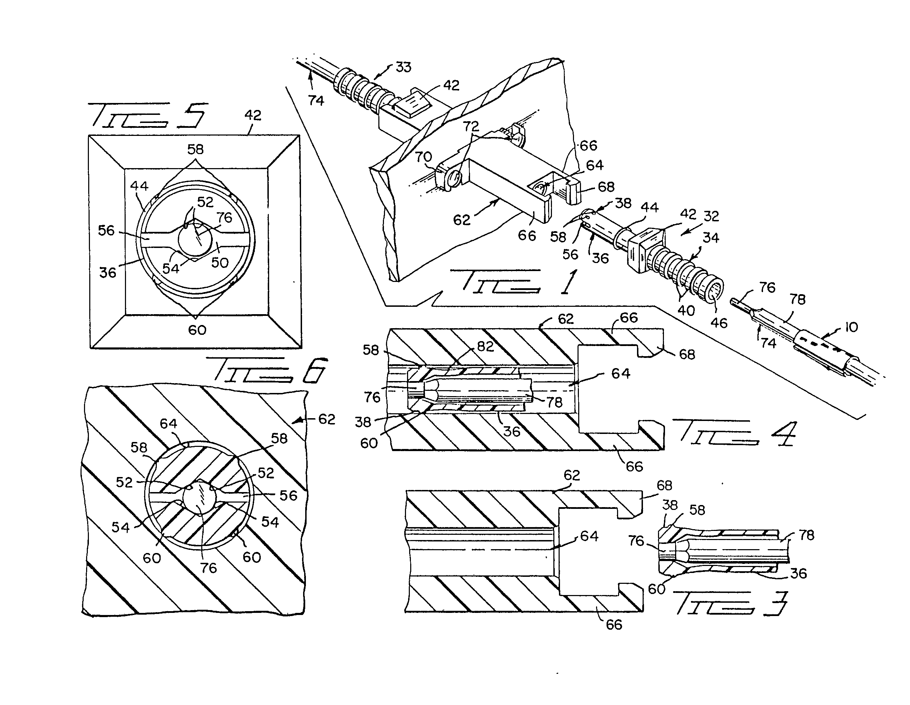

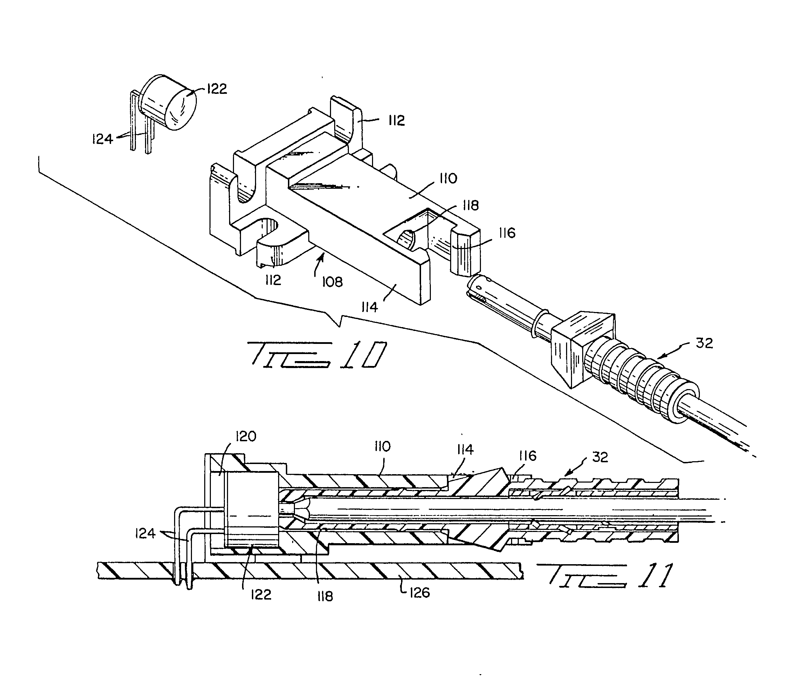

Referring now to Figures 1 to 7, a pair of plug members 32, 33 are shown to each comprise a rearward portion 34, an intermediate portion 36, and a forward alignment nose 38. The plug members are composed of substantially resilient plastic material, and both of the plug members 32, 33 are structurally identical. A series of annularly-directed, and axially-spaced gripping flanges 40 are provided integral with the rearward portion 34 of the plug member. A somewhat larger retention flange 42 is further provided and located between the rearward portion 34 and the intermediate portion 36 of each plug member. Extending annularly around the intermediate portion 36 is an alignment rib 44 which is located substantially equidistant from the ends of the intermediate portion 36. An axial bore extends through each of the plug members 32, 33 and is comprised of a rearward bore 46, an intermediate bore 48, and a profiled opening 50 which projects through the alignment nose 38 of each plug member, and which communicates with the intermediate bore 48.

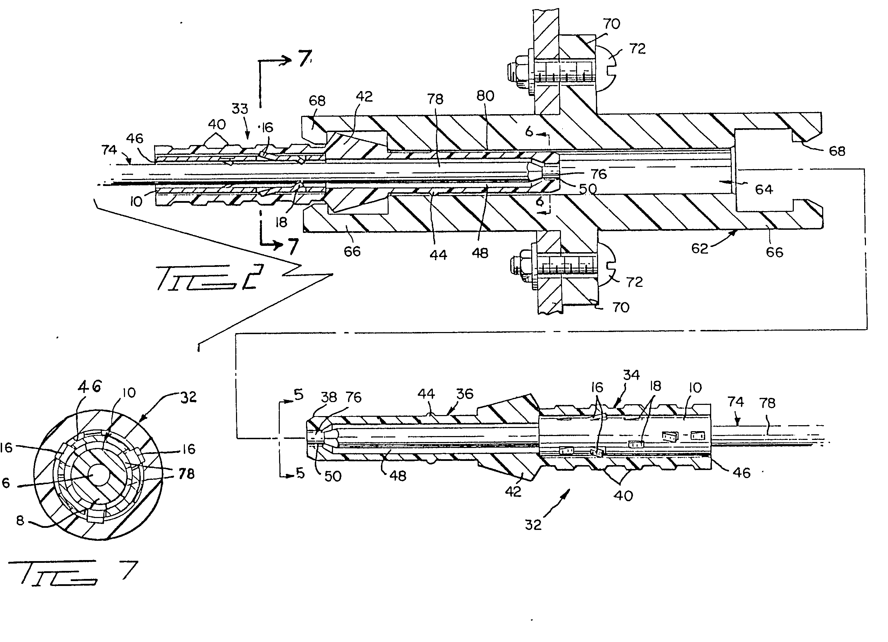

With reference to Figures 2, 5 and 6, the forward profiled opening 50 through the alignment nose 38 is defined by upper convergent surfaces 52, which converge away from the opening, and a pair of lower convergent surfaces 54 which converge downward and away from the opening. A transverse slot 56 is further provided to extend through the forward alignment nose 38 of each plug member, and is located so as to separate the upper convergent surfaces 52 from the lower surfaces 54. Situated on the external surface of the forward alignment nose 38 are a pair of upper alignment protrusions 58 and a pair of lower alignment protrusions 60. The protrusions 58, 60 are structured to be substantially resilient and compressible for a purpose to be explained in detail below. Further, it will be noted that the upper protrusions 58 are positioned to be diametrically opposed to corresponding lower protrusions 60, with the upper and lower protrusions 58, 60 being situated on opposite sides of the transverse slot 56.

Referring to Figure 1, a bulkhead mounted receptacle 62 is shown, having an axial passageway 64 extending therethrough. At opposite ends of receptacle 62, a pair of cantilever fingers 66 extend outwardly and provide latching flanges 68 at the respective remote ends thereof. A mounting flange 70 is provided about receptacle 62 and receives a pair of mounting screws 72 therethrough to affix the receptacle to the bulkhead. The receptacle body 62 is preferably composed of plastics material.

The receptacle 62 is intended optically to couple a pair of optical fibre, or waveguide, cables 74 which are structured having an interior fibre 76 and an outer jacket 78. The inner fibre 76 of such cables is typically composed of plastics material of optical quality, and can vary in diametric size between 16 to 40 thousandths of an inch. The jacket layer 78 which surrounds the interior fibre 76 functions to protect the fibre from external forces. Since the invention is intended to accommodate a termination of optical cables having a substantially wide range of dimension, operation of the connector will first be described for a fibre having an interior fibre of relatively small diametric dimension, and subsequently, and description of the operation of the subject invention will be presented for a cable having an interior fibre of relatively larger diametric dimension.

As seen in Figures 1, 2 and 7 each waveguide 74 is secured adjacent an end in a respective retention sleeve 10, each retention sleeve 10 comprises a plurality of annularly-spaced and outwardly-projecting tines 16 formed therefrom. The tines 16 project outwardly, and are biased in a rearward direction for a purpose explained below. In addition, each retention sleeve further constitutes a plurality of annularly-located and inwardly-projecting tines 17, which are biased to project into an axial sleeve bore 20. It will be appreciated that the precise number of projections 16, 18 is not critical, and that the projections are spaced apart and formed by a stamping operation through the metallic retention sleeve, forming the projections accordingly.

Assembly and operation of the connector proceeds as follows: With initial reference to Figure 1, the optical fibre cable 74 is prepared for termination by removing the jacket 78 from a forward end of the fibre 76. Thereafter, the fibre cable 74 is inserted through the tubular retention sleeve 10 and the plug member 32, as shown in Figure 2. It will be appreciated that the inwardly-directed tines 18 of the retention sleeve 10 resiliently exert engaging pressure on the jacket 78 of the cable. Subsequently, as shown in Figure 2, the retention sleeve 10 is inserted into the rearward bore 46 of the plug member 32. So located, the fibre cable 74 projects through the intermediate bore 48, and the fibre 76 projects through the profiled opening 50 of the alignment nose 38.

In exerting a rearwardly-directed axial tension into the optical fibre cable 74, the inwardly-directed tines 18 are made to penetrate into the jacket 78 of the cable, to thereby mechanically engage the cable and inhibit rearward withdrawal of the cable from the retention sleeve l0. This axial tension further acts to draw the outward tines 16 of the retention sleeve 10 into penetrating engagement with the plug member rearward portion 34. Consequently, the retention sleeve 10 is mechanically retained within the plug member, by operation of the outward directed tines 16. Likewise, the fibre optic cable 74 is mechanically retained within the retention sleeve 10 by operation of the inward directed tines 18.

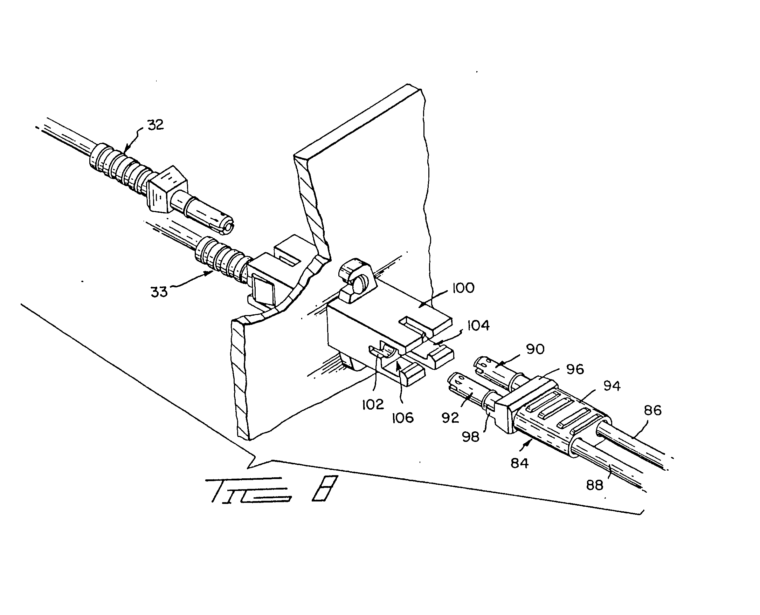

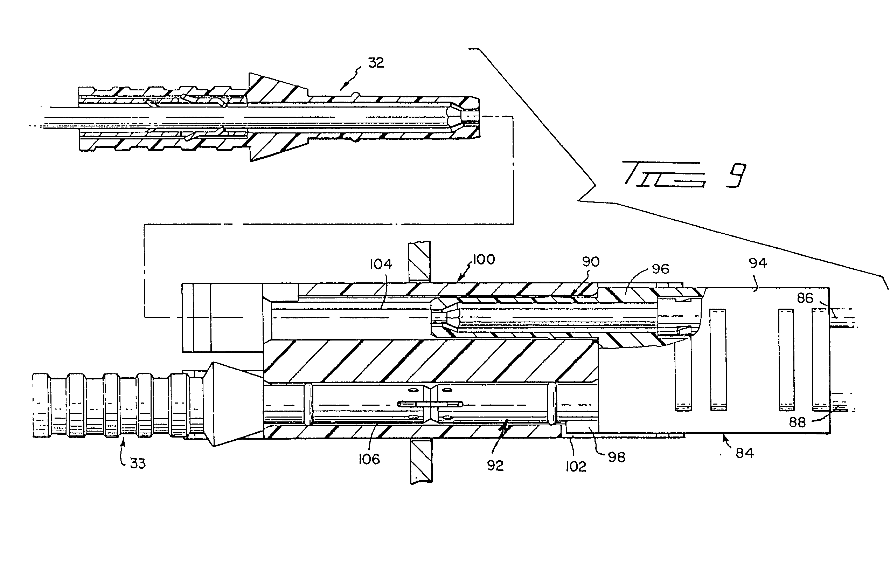

With continued reference to Figure 2 and additional reference to Figure 5, the forward end of the fibre 76 projects through the profiled opening of alignment nose 38. Thereafter, by a cutting technique common within the industry, the forward end surface of the fibre 76 is severed into a coplanar relationship with the forward end surface of the plug member 32. So located, the fibre cable 74 extends forward through the intermediate portion 36 of the plug member, and a small unjacketed portion of the fibre 76 projects through the alignment nose 38 to a forward end of a plug member. As best illustrated in Figure 5, the forward unjacketed portion of the fibre 76 is loosely contained between the convergent surfaces 52 and 54 of the alignment nose 38.

The plug member is now in a condition for insertion into the receptacle 62, as shown in Figure 2. As the plug member is inserted into the axial passageway 64 of the receptacle 62, the cantilever fingers 66 ride over the retention flange 42 of the plug member to mechanically lock the plug member into an engaging relationship with the receptacle. As shown by Figure 2, as the intermediate portion and the alignment nose portion of the plug member are inserted into the passageway 64, the protrusions 58, 60 of the alignment portion 38 and the annular alignment rib 44 of the intermediate portions 36 of the plug member engage with the receptacle walls defining the passageway 64 and compress radially inward. The engagement between the alignment rib 44 and the receptacle sidewalls serves to axially locate the plug member on the major axis of the passageway. Further, engagement of the protrusions 58,60 of the nose portion serves to radially compress convergent surfaces 52 and 54 of the nose portion 38 about the fibre 76, as shown in Figure 6.

From Figure 6 it will be apparent that the compressible protrusions 58, 60 engage the receptacle and cause the surfaces 52 and 54 to wedge the optical fibre 76 therebetween. The transverse slot 56 accommodates radial movement of the surfaces toward the optical fibre. In wedging the fibre between surfaces 52 and 54, the fibre is thereby located on the major axis of the passageway of the receptacle. The presence of the transverse slot 56 and the compressible nature of the protrusions 58, 60 operate to render the subject connector plug relatively insensitive to optical fibre dimensional variances.

From Figure 2, the interior dimensions of the intermediate bore 48 are sufficiently large to accommodate receipt of optical fibre cables having an outer diameter which may vary within a specified range. Also, the alignment nose 38 is structured to accommodate optical fibres having diameters variable about nominal dimensions of 16 or 40 thousands of an inch.

As will be recognized in viewing Figure 2, the pair of plug members 32, 33 are inserted into opposite ends of the passageway 64 and are brought into abutting opposition intermediate of the passageway. There located, the axes of the fibres 76 extending through the alignment nose portion of each plug member are in alignment on the major axis of the passageway 64, and an efficient optical coupling between two optical cables is thereby effectuated. It will be noticed that the body of the intermediate portion 36 does not frictionally engage the receptacle, but rather, an axial gap 80 exists between the annular alignment rib 44 and the protrusions 58, 60 of the plug member. This gap reduces insertion friction and enables the plug to be inserted with minimal amount of insertion force required. Thus, the plug member achieves an alignment function solely by operation of the rib 44 and the protrusions on the alignment nose 38 of the plug member.

Referring now to Figures 3 and 4, each of the subject connector plugs, as stated previously can accommodate receipt of an optical cable 74, the inner fibre 76 of which has a diameter which is somewhat larger than that of the fibre illustrated in the preceding discussion. For purposes of illustration, a fibre 76 of larger outer dimension is shown to project through the alignment portion 38 of the plug member in the manner described above. As shown in Figure 3, the oversize fibre still projects freely, but with less clearance, through the opening in the nose portion of the plug member, prior to insertion of the plug member into the receptacle passageway. As the plug member is matingly inserted into the receptacle passageway as shown in Figure 4, the protrusions 58, 60 of the nose portion compressibly engage the receptacle sidewalls lining the passageway, to locate the optical fibre 76 on the axis passageway. In exerting radial force on the optical fibre at separated points of contact, an inward dimple 82 is created by flexed material of the plug. The dimple 82 extends annularly around the intermediate plug portion 36, and stress relieves the plug member from forces generated by the protrusions 58, 60 and the alignment rib 44.

Thus, it will be appreciated that the embodiment described above comprises a connector plug of unitary configuration which is adapted to receive an optical cable having an interior bore and outer diameter dimension variable within limits. Further, no polishing is required when effectuating such a termination; nor is there a need for adhesive material in mechanically attaching the plug to the optical cables. Furthermore, since the termination of optical cable by operation of the subject invention requires no specialized tooling, it is therefore suitable for field applications. Lastly, the optical fibre connector is comprised of inexpensive-to-produce components which result in a connector of substantially lower manufacturing cost than currently available alternatives in the industry.

Referring to Figures 8 and 9 the invention is alternatively illustrated as a duplex plug 84, for terminating a pair of optical waveguides 86, 88. The duplex plug 84 comprises a pair of forward projecting plug members 90, 92 which are encased jointly in an elastomeric plug body 94. The plug body 94 is further provided with a rectangular retention flange 96 intermediate the length thereof and includes a keying projection 98 as shown. The keying projection 98 is located immediately forward of the retention flange 96 and along the external side of the plug member 92.

The duplex receptacle 100 is provided with a keying slot 102 in one side thereof, and is further structured to provide a pair of parallel and adjacent axial bores 104, 106 projecting therethrough. It will be appreciated that the receptacle 100 is a duplex version of the simplex receptacle 62 illustrated in Figure 1. It will further be noted upon a combined consideration of Figures 8 and 9 that the duplex receptacle 100 is adapted to alternatively receive a duplex plug 84 therein, or a pair of simplex plugs 32, 33. The alignment structure of the duplex and simplex plugs are identical and coaxial alignment of the optical waveguides terminated by each is as previously described. As shown in Figure 9, the keying projection 98 of the duplex plug 84 is aligned within the keying slot 102 of the receptacle. The simplex plugs 32, 33, having no such keying projection, may be readily inserted into the duplex receptacle bores at the option of the user. Thus, the duplex receptacle 100 can matingly couple a pair of duplex plugs 84, or four simplex plugs such as 32, 33 or a single duplex plug; and a pair of simplex plugs. Such versatility enables the user of the subject invention to converge a pair of optical waveguides from remote locations on a printed circuit board to a single duplex receptacle, and then exit the duplex receptacle through a single duplex plug.

With reference to Figures 10 and 11, an active device mount 108 may be used in combination with a simplex plug 32 as illustrated. The active device mount 108 comprises a low profile body 110 having slotted mounting flanges 112 extending therefrom at right angles for either vertical or horizontal (shown horizontal) mounting of the active device mount on a printed circuit board 126. A pair of parallel cantilever fingers 114 project forward of the module body 110, each having a latching flange 116 at the forward end thereof. The cantilever fingers 114 function similarly as the cantilever fingers 66 illustrated in Figure 2.

The body 110 is provided with an axial bore 118 extending therein, and communicating with a larger dimensioned counterbore 120 located in a rearward portion of the body. The counterbore 120 is adapted to receive an electro-optic device package 122 therein, having a plurality of leads 124 exiting the mount body at right angles. The active device package 122 includes an emitter or detector chip (not shown) which aligns on the axis of the mount body bore 118. The right-angled leads 124 are intended for electrical engagement with the semiconductor chip and project opposite ends through a printed circuit board 126 to establish electrical interconnections with circuitry on the printed circuit board. The simplex plug 32 is matingly inserted into a forward end of the active device mount 108, and serves to colinearly align an optical waveguide on the axis of the mount bore 118, thereby establishing an optical coupling with the semiconductor chip.

As will be appreciated in viewing Figure 1, the subject plug member is provided with alignment structure which functions independently of the rotational status of the plug member. Thus, each plug member can be rotated 90 degrees, and inserted into the receptacle bore to effectuate alignment of the optical waveguide on the axis of the bore. Without a requirement of keying the plug member to the receptacle, the risk of mismating between the receptacle and each plug member is thereby reduced. A further advantage of the present invention which will be readily appreciated from Figure 1 is that the subject connector comprises a relatively few number of component parts, which are amenable to factory pre-assembly. For example, the retention sleeve 10 may be pre-located in each plug member 32, 33, 58, and shipped as an integral package. Thereafter, in a field environment, the single unitary package may be applied to an optical waveguide without the use of adhesive or special tools. The absence of loose pieces in the field represents significant convenience to the user of the subject invention.

It will further be appreciated from Figures 10 and 11 that the subject active device mount of the invention provides a relatively low profile. This low profile reduces the space required in affixing the active device mount to a printed circuit board, thereby presenting significant advantages in packaging. Moreover, the simplex plug 32 is coupled to the active device mount body by a straight axial movement, and snaps into mating engagement without the use of complicated coupling mechanisms such as screw threads and nuts. Since the dimensional size of these components is relatively small and the space on the printed circuit board in which to work is comparatively limited, a straight-forward means for mating the connector components of the subject invention is a significant advantage over the prior art, and permits location of the active device mount anywhere on the printed circuit board and not only on the board edge.

## Claims

1. A connector plug member for coaxially locating an optical waveguide (74) of the type comprising a centre waveguide fibre (76) and an outer jacket layer (78) within a bore (64) of a receptacle member (62) the plug member (32) comprising an elongate plug body (36) for insertion within the bore (64), the body (36) having an axial passageway (48) for receiving the optical waveguide (74), a forward alignment nose portion (38) having an opening therethrough communicating with the passageway (48), and a rearward passageway portion (34) for passage of the waveguide (74) to the nose portion (38) characterised in that a retention sleeve (10) is provided for receiving and securing the waveguide (74) and for insertion and retention within the rear passageway portion (34), the retention sleeve (10) having tines for inhibiting, rearward withdrawal of the optical waveguide (74) from the plug member (32), with the nose portion (38) being bifurcated by a transverse slot (56), the opening (50) in the nose portion (38) being defined by opposed V-shaped notch surfaces (52, 54) separated by the transverse slot (56) extending through the nose portion (38) whereby on insertion of the waveguide (74) and the retention sleeve (10) into the passageway (48) through the rearward passageway portion (34) a forward end portion (76) of the waveguide fibre is grippingly received between the opposed notch surfaces (52, 54), said nose portion (38) further comprising external resilient protrusion members (58, 60) for engaging the receptacle bore (64, 104, 106, 118) and radially influencing said V-profiled surfaces (52, 54) inward into clamping engagement with the waveguide fibre (76).

2. A connector plug member as claimed in claim 1, characterised by the retention member (10) having a first series of inwardly directed tines (18) angularly spaced around the sleeve (10) for engaging the optical waveguide and a second series of outwardly directed tines (16) extending rearwardly for engaging the rearward passageway portion and resisting withdrawal of the sleeve (10), and in that the tubular sleeve (10) is tubular prior to insertion of the waveguide (74) therein, in that the first series of inwardly directed tines (18) extend resiliently forwardly within the sleeve (10) prior to insertion of the waveguide (74) therein, in such a manner that upon insertion of the cable (2) forwardly into the sleeve (10) the said tines (18) resiliently engage the sheath (8) thereof to admit forward movement of the cable (2) into the sleeve (10) and upon exertion of a force axially rearwardly on the cable (2) the said tines (18) penetrate the sheath (8) thereby to secure the sleeve (10) to the cable, and in that the second series of outwardly directed tines (16) are arranged resiliently to engage the side wall of the bore (24) when the sleeve is inserted therein in such a manner that upon insertion of the sleeve (10) forwardly into passageway portion (34) the said tines (16) resiliently engage the side walls of the passageway (34) to admit forward movement and upon application of a rearward axial force on the waveguide (74) the said tines (16) plough into the side wall of passageway (34) to resist withdrawal and secure the tubular sleeve retention member (10) in the bore (24).

3. A connector plug member as set forth in claim 1 or 2, characterised in that said plug body (36) has an external annular flange (44) axially spaced a distance rearwardly of said protrusion members (58, 60).

4. A connector plug member as set forth in claim 1 or claim 2, characterised in that said axial passageway (48) and said rearward passageway (46) of said plug member (32, 33, 84) are of larger internal dimension relative to said opening (50) through said alignment nose portion (38).

5. A connector plug member as set forth in claim 1 or claim 2, characterised in that said plug member rearward portion (34) comprises external contour members (40) for assisting manual grasp of said plug member.

6. A connector plug member as set forth in claim 1 or claim 2, characterised in that said plug body (36) comprises a retention flange (42, 96) engageable by latching members (68, 116) of flexible members (66, 114) extending outwardly from a receptacle (62, 100, 108).

7. A connector plug member as set forth in claim 6, characterised in that said plug body (36) comprises a keying projection (98) for engagement with a keying slot (102) in said receptacle (100).

**Patentansprüche**

1. Verbinder-Steckerelement zur koaxialen Positionierung eines optischen Wellenleiters (74) derjenigen Art, die eine zentrale Wellenleiterfaser (76) und eine äußere Umhüllungsschicht (78) innerhalb einer Bohrung (64) eines Buchsenelements (62) umfaßt, wobei das Steckerelement (32) einen länglichen Steckerkörper (36) zum Einsetzen in die Bohrung (64) umfaßt, wobei ferner der Körper (36) einen axialen Durchgang (48) zur Aufnahme des optischen Wellenleiters (74) besitzt, ferner einen vorderen Ausrichtnasenabschnitt (38) mit einer hindurchgehenden Öffnung, welche mit dem Durchgang (48) in Verbindung steht, sowie einen hinteren Durchgangsabschnitt (34) zum Durchtritt des Wellenleiters (74) zum Nasenabschnitt (38), dadurch gekennzeichnet, daß eine Haltehülse (10) zur Aufnahme und zur Befestigung des Wellenleiters (74) und zum Einsetzen und Halten innerhalb des hinteren Durchgangsabschnitts (34) vorgesehen ist, daß die Haltehülse (10) Zacken zur Verhinderung eines rückwärtigen Herausziehens des optischen Wellenleiters (74) aus dem Steckerelement (32) besitzt, daß der Nasenabschnitt (38) durch einen Querschlitz (56) gegabelt ist, daß die Öffnung (50) in dem Nasenabschnitt (38) durch gegenüberstehende V-förmige Kerbenoberflächen (52, 54) begrenzt ist, welche durch den Querschlitz (56) getrennt sind, der sich durch den Nasenabschnitt (38) hindurcherstreckt, wobei beim Einsetzen des Wellenleiters (74) und der Haltehülse (10) in den Durchgang (48) durch den hinteren Durchgangsabschnitt (34) ein vorderer Endabschnitt (76) der Wellenleiterfaser ergreifend zwischen den gegenüberstehenden Kerbenoberflächen (52, 54) aufgenommen wird, wobei der Nasenabschnitt (38) ferner äußere elastische Vorsprungselemente (58, 60) umfaßt, um mit der Buchsenbohrung (64, 104, 106, 118) in Eingriff zu treten und um auf die V-profilierten Oberflächen (52, 54) in klemmendem Eingriff mit der Wellenleiterfaser (76) radial einzuwirken.

2. Verbinder-Steckerelement nach Anspruch 1, dadurch gekennzeichnet, daß das Halteelement (10) eine erste Reihe von einwärts gerichteten Zacken (18) besitzt, die winkelmäßig im Abstand um die Hülse (10) herum angeordnet sind, um mit dem optischen Wellenleiter in Eingriff zu treten, sowie eine zweite Reihe von auswärts gerichteten Zacken (16), die sich nach hinten erstrecken zum Eingriff mit dem hinteren Durchgangsabschnitt und die einem Herausziehen der Hülse (10) entgegenwirken, daß die rohrförmige Hülse (10) vor dem Einsetzen des Wellenleiters (74) in sie rohrförmig ist, daß die erste Reihe von einwärts gerichteten Zacken (18) sich elastisch innerhalb der Hülse (10) nach vorne erstrecken vor dem Einsetzen des Wellenleiters (74) darin, und zwar in derartiger Weise, daß beim Einsetzen des Kabels (2) vorwärts in die Hülse (10) hinein diese Zacken (18) elastisch mit seiner Hülle (8) in Eingriff treten, um eine Vorwärtsbewegung des Kabels (2) in die Hülse (10) hinein zu gestatten, und daß beim Ausüben einer Kraft auf das Kabel (2) axial rückwärts diese Zacken (18) die Hülle (8) durchdringen, wodurch die Hülse (10) am Kabel festgelegt wird, und daß die zweite Reihe von auswärts gerichteten Zacken (16) elastisch angeordnet sind, um mit der Seitenwand der Bohrung (24) in Eingriff zu treten, wenn die Hülse in diese derart eingesetzt wird, daß beim Einsetzen der Hülse (10) vorwärts in den Durchgangsabschnitt (34) hinein die Zacken (16) elastisch mit den Seitenwänden des Durchgangs (34) in Eingriff treten, um eine Vorwärtsbewegung zu gestatten, und daß bei Ausübung einer axialen Rückwärtskraft auf den Wellenleiter (74) die Zacken (16) sich in die Seitenwand des Durchgangs (34) hineingraben, um einem Herausziehen zu widerstehen und um das rohrförmige Hülsenhalteelement (10) in der Bohrung (24) zu befestigen.

3. Verbinder-Steckerelement nach Anspruch 1 oder 2, dadurch gekennzeichnet, daß der Steckerkörper (36) einen äußeren ringförmigen Flansch (44) besitzt, der axial im Abstand einer Strecke rückwärts zu den Vorsprungselementen (58, 60) angeordnet ist.

4. Verbinder-Steckerelement nach Anspruch 1 oder 2, dadurch gekennzeichnet, daß der axiale Durchgang (48) und der hintere Durchgang (46) des Steckerelements (32, 33, 34) einen größeren Innendurchmesser relativ zu der Öffnung (50) durch den Ausrichtnasenabschnitt (38) aufweisen.

5. Verbinder-Steckerelement nach Anspruch 1 oder 2, dadurch gekennzeichnet, daß der hintere Abschnitt (34) des Steckerelements äußere Konturelemente (40) zur Unterstützung des manuellen Ergreifens des Steckerelements umfaßt.

6. Verbinder-Steckerelement nach Anspruch 1 oder 2, dadurch gekennzeichnet, daß der Steckerkörper (36) einen Halteflansch (42, 96) besitzt, der in Eingriff mit Verriegelungselementen (68, 116) von flexiblen Elementen (66, 114) treten kann, die sich von einer Buchse (62, 100, 108) aus auswärts erstrecken.

7. Verbinder-Steckerelement nach Anspruch 6, dadurch gekennzeichnet, daß der Steckerkörper (36) einen Verteilungsvorsprung (98) zum Eingriff mit einem Verkeilungsschlitz (102) in der Buchse (100) umfaßt.

## Revendications

1. Elément à fiche de connecteur pour positionner coaxialement un guide d'ondes optique (74) du type comprenant une fibre centrale (76) de guide d'ondes et une couche de gaine extérieure (78) à l'intérieur d'un alésage (64) d'un élément à prise (62), l'élément à fiche (32) comprenant un corps de fiche allongé (36) destiné à être inséré dans l'alésage (64), le corps (36) présentant un passage axial (48) destiné à recevoir le guide d'ondes optique (74), une partie avant de nez d'alignement (38) traversée par une ouverture communiquant avec le passage (48), et une partie arrière de passage (34) pour le passage du guide d'ondes (74) jusqu'à la partie de nez (38), caractérisé en ce qu'un manchon (10) de retenue est prévu pour recevoir et fixer le guide d'ondes (74) et pour être inséré et retenu dans la partie de passage arrière (34), le manchon (10) de retenue comportant des dents destinées à empêcher le guide d'ondes optique (74) d'être retiré vers l'arrière de l'élément à fiche (32), la partie de nez (38) étant divisée en fourche par une fente transversale (56), l'ouverture (50) de la partie de nez (38) étant définie par des surfaces d'encoches opposées (52, 54) en forme de V séparées par la fente transversale (56) qui s'étend à travers la partie de nez (38) afin que, lors d'une insertion du guide d'ondes (74) et du manchon (10) de retenue dans le passage (48) à travers la partie de passage arrière (34), une partie extrême avant (76) de la fibre guide d'ondes soit reçue et prise entre les surfaces opposées (52, 54) d'encoches, ladite partie de nez (38) comprenant en outre des éléments élastiques extérieurs (58, 60) en saillie destinés à porter contre l'alésage (64, 104, 106, 118) de la prise et sollicitant radialement vers l'intérieur lesdites surfaces profilées en V (52, 54) jusqu'en prise de serrage avec la fibre guide d'ondes (76).

2. Elément à fiche de connecteur selon la revendication 1, caractérisé en ce que l'élément de retenue (10) comporte une première série de dents (18) dirigées vers l'intérieur, espacées angulairement autour du manchon (10) pour établir une prise avec le guide d'ondes optique et une seconde série de dents (16) dirigées vers l'extérieur, s'étendant vers l'arrière pour établir une prise avec la partie de passage arrière et résister au retrait du manchon (10), et en ce que le manchon tubulaire (10) est tubulaire avant l'insertion du guide d'ondes (74) dans ce manchon, en ce que la première série de dents (18) dirigées vers l'intérieur s'étend élastiquement vers l'avant à l'intérieur du manchon (10) avant l'insertion du guide d'ondes (74) dans ce dernier, de manière qu'à la suite de l'insertion du câble (2) vers l'avant dans la manchon (10), lesdites dents (18) établissent une prise élastique avec sa gaine (8) pour permettre un mouvement du câble (2) vers l'avant jusque dans le manchon (10) et que, à la suite de l'application d'une force axialement vers l'arrière sur le câble (2), lesdites dents (18) pénètrent dans la gaine (8), fixant ainsi le manchon (10) au câble, et en ce que la seconde série de dents (16) dirigées vers l'extérieur est disposée de façon à établir une prise élastique avec la paroi latérale de l'alésage (24) lorsque le manchon y est inséré de manière qu'à la suite d'une insertion du manchon (10) vers l'avant dans la partie de passage (34), lesdites dents (16) entrent en prise élastique avec les parois latérales du passage (34) pour permettre un mouvement vers l'avant et, à la suite de l'application d'une force axiale vers l'arrière sur le guide d'ondes (74), lesdites dents (16) mordent dans la paroi latérale du passage (34) pour résister au retrait et fixer l'élément (10) de retenue du manchon tubulaire dans l'alésage (24).

3. Elément à fiche de connecteur selon la revendication 1 ou 2, caractérisé en ce que ledit corps de fiche (36) comporte une bride annulaire extérieure (44) espacée axialement vers l'arrière d'une certaine distance desdits éléments en saillie (58, 60).

4. Elément à fiche de connecteur selon la revendication 1 ou la revendication 2, caractérisé en ce que ledit passage axial (48) et ledit passage arrière (46) dudit élément à fiche (32, 33, 84) ont une dimension intérieure plus grande que celle de ladite ouverture (50) traversant ladite partie de nez d'alignement (38).

5. Elément à fiche de connecteur selon la revendication 1 ou la revendication 2, caractérisé en ce que ladite partie arrière (34) de l'élément à fiche comprend des éléments (40) de contour extérieur pour faciliter une prise manuelle dudit élément à fiche.

6. Elément à fiche de connecteur selon la revendication 1 ou la revendication 2, caractérisé en ce que ledit corps de fiche (36) comprend une bride (42, 96) de retenue avec laquelle peuvent s'enclencher des éléments de verrouillage (68, 116) d'éléments flexibles (66, 114) s'étendant vers l'extérieur à partir d'une prise (62, 100, 108).

7. Elément à fiche de connecteur selon la revendication 6, caractérisé en ce que ledit corps de fiche (36) comprend une saillie détrompeuse (98) destinée à s'enclencher avec une encoche détrompeuse (102) de ladite prise (100).

FIG. 1

FIG. 2

FIG. 3

FIG. 4

FIG. 5

FIG. 6

FIG 2

FIG 7

EP 0 154 781 B1

FIG. 8

FIG 9

4

*FIG. 10*

*FIG. 11*